# EUROPEAN PATENT SPECIFICATION

(11) **EP 3 887 705 B1**
(45) Date of publication and mention of the grant of the patent: **27.03.2024**
(21) Application number: 19890115.9
(22) Date of filing: 25.11.2019
(51) Int. Cl.: F16L 41/03, F15D 1/14

(54) **FLUID MANIFOLD**
FLÜSSIGKEITSVERTEILER
COLLECTEUR DE FLUIDE

(30) Priority: 27.11.2018 US 201862771959 P
(43) Date of publication of application: 06.10.2021
(73) Proprietor: Saint-Gobain Performance Plastics Corporation, Solon, OH 44139 (US)
(72) Inventor: HUSCHKE, Michael R., Midland, Michigan 48642 (US)
(74) Representative: Zimmermann & Partner Patentanwälte mbB
(86) International application number: PCT/US2019/063027
(87) International publication number: WO 2020/112646

(56) References cited:
- DE-U1- 8 900 751
- US-A- 1 850 937
- US-A- 4 717 289
- US-A1- 2016 157 419

## Description

### TECHNICAL FIELD

The present disclosure relates to fluid manifolds.

### BACKGROUND ART

Fluid manifolds are often used where fluid flow paths are joined together. For instance, fluid manifolds can permit passage of fluid from a first conduit to one or more secondary conduits. Traditionally, fluid manifolds for distributing fluid flow to multiple output conduits utilize a main passageway with a number of fluid output openings commensurate with a number of output conduits to be attached to the fluid manifold.

In certain fields of use, such as in pharmaceuticals and the development of certain biological fluids, fluid manifolds distribute expensive, high cost materials. Retention of such materials within the fluid manifold can be costly to the manufacturer. Thus, industries using fluid manifolds continue to demand improvements in fluid manifolds to increase operational output while minimizing waste.

US 4 717 289 A relates to a farm implement having a horizontally disposed apparatus for splitting an air-entrained stream of particles, such as seed or fertilizer, into a plurality of individual streams containing uniform and randomly divided quantities of particles for further distribution to the ground. A horizontally disposed, tubular, stream splitting distribution body is described. The body has a transition section progressively and symmetrically changing in a downstream direction from a circular configuration toward a generally flat configuration, a generally flat transfer section leading from the transition section and spreading symmetrically laterally outwardly in the downstream direction, and a single layer of generally horizontally disposed fore-and-aft extending outlet tubes at the downstream end of the transfer section. The transition section has a circular inlet for receiving seeds from a pipe.

US 2016/157419 A1 relates to material distributors used with agricultural or farm implements. A mean header includes a header body with an inlet that receives entrained material from a material tank via material/air hose, and multiple outlets that connect to primary hoses to distribute material to secondary headers. The header body has a width W defined between sidewalls that increases in a direction from the inlet toward the outlets, giving the header body a fan-like shape. The inlet can be a circular shaped opening formed at a proximal end, relative to the material tank, of the header body and the outlets can have a circular shape and be aligned along a distal end of the header body. The header body can have a circular cross-sectional shape adjacent to the proximal end that gradually becomes a rectangular cross-sectional shape at the distal end, giving a flattened top surface and bottom surface.

US 1 850 937 A describes to a distributing device adapted for the uniform distribution and spraying of highly pulverulent materials such as insecticide and fungicide powders. A distributor in the form of a fan-shaped casing having an inlet at the small end and a plurality of outlets at the peripheral edge are described. The inlet end is of a size and shape to correspond to the size and shape of a conduit to which it is applied.

DE 89 00 751 U1 describes a vacuum cleaner mouthpiece which includes a connecting piece that can be inserted into a suction pipe, and a suction mouth.

### BRIEF DESRIPTION OF THE DRAWINGS

Embodiments are illustrated by way of example and are not intended to be limited in the accompanying figures.
FIG. 1 includes a perspective view of a fluid manifold in accordance with an embodiment.
FIG. 2 includes a cross-sectional perspective view of a fluid manifold in accordance with an embodiment.

### DETAILED DESCRIPTION OF THE PREFERRED EMBODIMENT(S)

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings. However, other embodiments can be used based on the teachings as disclosed in this application.

The terms "comprises," "comprising," "includes," "including," "has," "having" or any other variation thereof, are intended to cover a non-exclusive inclusion. For example, a method, article, or apparatus that comprises a list of features is not necessarily limited only to those features but may include other features not expressly listed or inherent to such method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

The terms "generally," "substantially," "approximately," and the like are intended to cover a range of deviations from the given value. In a particular embodiment, the terms "generally," "substantially," "approximately," and the like refer to deviations in either direction of the value within 10% of the value, within 9% of the value, within 8% of the value, within 7% of the value, within 6% of the value, within 5% of the value, within 4% of the value, within 3% of the value, within 2% of the value, or within 1% of the value.

Also, the use of "a" or "an" is employed to describe elements and components described herein. This is done merely for convenience and to give a general sense of the scope of the invention. This description should be read to include one, at least one, or the singular as also including the plural, or vice versa, unless it is clear that it is meant otherwise. For example, when a single item is described herein, more than one item may be used in place of a single item. Similarly, where more than one item is described herein, a single item may be substituted for that more than one item.

Unless otherwise defined, all technical and scientific terms used herein have the same meaning as commonly understood by one of ordinary skill in the art to which this invention belongs. The materials, methods, and examples are illustrative only and not intended to be limiting. To the extent not described herein, many details regarding specific materials and processing acts are conventional and may be found in textbooks and other sources within the fluid transport arts.

In accordance with an aspect described herein, a fluid manifold includes a body defining a fluid inlet, a plurality of fluid outlets, and a volume disposed between and in fluid communication with the fluid inlet and the plurality of fluid outlets. The volume defines a first width, W_{I}, as measured at a first location near the fluid inlet, a second width, W_{O}, as measured at a second location near the plurality of fluid outlets, a first thickness, T_{I}, as measured at the first location perpendicular to W_{I}, and a second thickness, T_{O}, as measured at the second location perpendicular to W_{O}. Therein, W_{O} > W_{I} ≥ T_{I} > T_{O}. The body defines an inlet sidewall thickness as measured along a fluid inlet coupling portion, and a volume sidewall thickness as measured along the volume, wherein the volume sidewall thickness is greater than the inlet sidewall thickness. In a more particular embodiment, W_{O} > W_{I} > T_{I} > T_{O}.

In another aspect, a fluid manifold includes a body defining a fluid inlet, a plurality of fluid outlets, and a volume disposed between and in fluid communication with the fluid inlet and the plurality of fluid outlets. The volume has a tapered width and a tapered thickness. The tapered width tapers in a direction opposite of the tapered thickness. The body defines an inlet sidewall thickness as measured along a fluid inlet coupling portion, and a volume sidewall thickness as measured along the volume, wherein the volume sidewall thickness is greater than the inlet sidewall thickness.

In an embodiment, at least some of the plurality of fluid outlets can be disposed along a same plane. In a more particular embodiment, all of the plurality of fluid outlets can be disposed along a same plane. In another particular embodiment, the plurality of fluid outlets is disposed along at least two planes. The two planes can be parallel with respect to one another. In an embodiment, the internal ends of the plurality of fluid outlets can be disposed along a line extending perpendicular to a central axis of the fluid inlet. In another embodiment, least one of the plurality of fluid outlets has a central axis parallel with a central axis of the fluid inlet. In a more particular embodiment, all of the plurality of fluid outlets can have a central axis parallel with a central axis of the fluid inlet.

In an embodiment, the volume can define a triangular cross section, as viewed from a top view. In another embodiment, the volume can define a quadrilateral cross section, as viewed from a side view. In another embodiment, the inlet can have a diameter greater than a diameter of any of the plurality of outlets. In yet another embodiment, all of the plurality of outlets can have the same diameters as one another.

In an embodiment, the body of the fluid manifold can be monolithic. In an embodiment, each of the plurality of fluid outlets can define an opening adapted to receive an end of a hose. The opening can have a diameter greater than a diameter of the fluid outlet. In an embodiment, the opening can define a diameter approximately equal to an outer diameter of the hose. The fluid outlet can define a diameter approximately equal to an inner diameter of the hose.

In an embodiment, the volume sidewall thickness can taper, as measured between the fluid inlet and the plurality of fluid outlets.

In an embodiment, adjacent fluid outlets can be spaced apart from one another by a wall of the body. In a particular embodiment, the upstream side of the wall can define a curved profile. The upstream side of the wall can be closest to the volume defined by the volume of the body. In an embodiment, the volume can define a storage area for fluid not yet passed out of the plurality of fluid outlets. The storage area can be less than 250 cc, less than 100 cc, less than 50 cc, less than 25 cc, less than 10 cc, or less than 5 cc. In an embodiment, the fluid manifold is adapted to prevent fluid retention within the volume after use.

In a particular aspect, a fluid system includes a fluid inlet hose, a plurality of fluid outlet hoses, and a fluid manifold coupled between the fluid inlet hose and the plurality of fluid outlet hoses, wherein the fluid manifold is in accordance with the present disclosure.

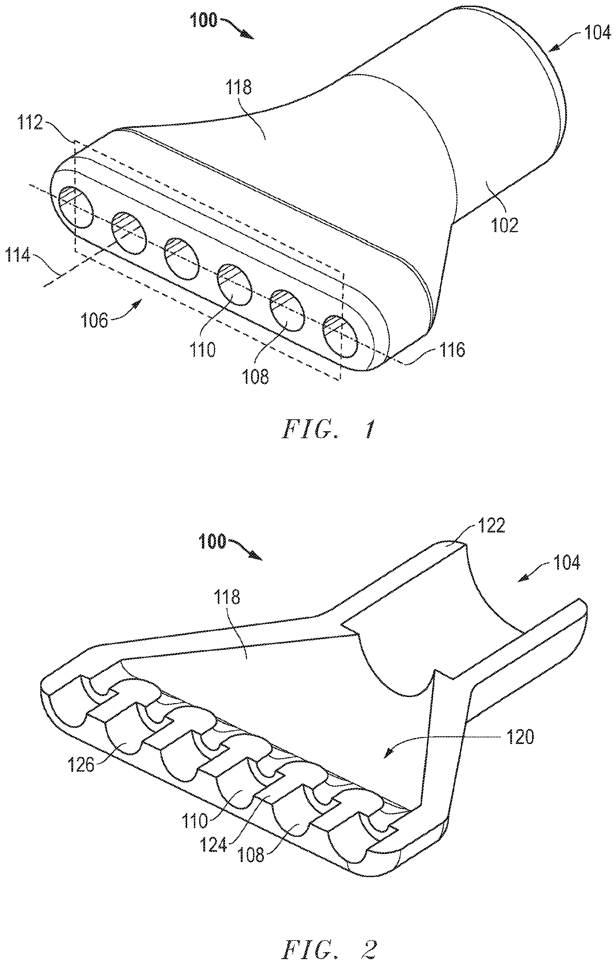

Referring to FIG. 1, a fluid manifold 100 in accordance with an embodiment described herein includes a body 102 defining a fluid inlet 104 and a plurality of fluid outlets 106, which may include a first fluid outlet 108 and a second fluid outlet 110. In an embodiment, the first and second fluid outlets 108 and 110 can be adjacent fluid outlets 106. In the illustrated embodiment, all of the plurality of fluid outlets 106 can terminate along a same plane 112. That is, distal edges of the fluid outlets 106 can all be coterminous along the same plane 112. In another embodiment, at least one of the plurality of fluid outlets 106 can be offset from the plane 112. In a more particular embodiment, a plurality of the fluid outlets 106 can be offset from the plane 112. In yet a more particular embodiment, none of the fluid outlets 106 can be coterminous with one another.

In an embodiment, all of the plurality of fluid outlets 106 can have central axis 114 oriented parallel, or generally parallel, with respect to one another. In another embodiment, the central axis 114 of at least one of the fluid outlets 106 can be angularly offset from the central axis 114 of another one of the fluid outlets 106.

In an embodiment, the central axis 114 of the fluid outlets 106, or at least one of the fluid outlets 106, can be parallel with a central axis of the fluid inlet 104. In certain instances, parallel flow paths can reduce fluid turbulence within the fluid manifold 100. Reduced turbulence can mitigate fluid shear during fluid transfer operations.

In an embodiment, the fluid outlets 106 can define diameters, D_{O}, less than the diameter, D_{I}, of the fluid inlet 104. In an embodiment, D_{O} can be less than 1 D_{I}, less than 0.99 D_{I}, less than 0.98 D_{I}, less than 0.97 D_{I}, less than 0.96 D_{I}, less than 0.95 D_{I}, less than 0.94 D_{I}, less than 0.93 D_{I}, less than 0.92 D_{I}, less than 0.91 D_{I}, less than 0.9 D_{I}, less than 0.8 D_{I}, less than 0.7 D_{I}, less than 0.6 D_{I}, less than 0.5 D_{I}, or less than 0.4 D_{I}. In another embodiment, D_{O} is no less than 0.01 D_{I}, no less than 0.1 D_{I}, or no less than 0.25 D_{I}.

In certain embodiments, the cumulative opening size of the fluid outlets 106 can be no less than the opening size of the fluid inlet 104. That is, fluid introduced into the fluid manifold 100 can exit the fluid outlets 106 without generating internal pressure within the fluid manifold 100. This can reduce shear and culture damage to cells contained within the fluid. In another embodiment, the cumulative opening size of the fluid outlets 106 can be at least the size of the opening size of the fluid inlet 104. In a more particular embodiment, the cumulative opening size of the fluid outlets 106 can be greater than the size of the opening size of the fluid inlet 104.

In an embodiment, the fluid outlets 106 can lie along a straight line. For instance, as illustrated in the embodiment of FIG. 1, the plurality of fluid outlets 106 lie along a line 116 oriented perpendicular to the central axis 114 of the fluid outlets 106. The line 116 can be a straight line. In another embodiment, the plurality of fluid outlets 106 can lie along a curved line 116. In yet another embodiment, the plurality of fluid outlets 106 can lie along a line 116 having arcuate and linear segments. In a further embodiment, the fluid outlets 106 can lie along a plurality of lines 116. For instance, the fluid outlets 106 can lie along at least two straight lines, at least two curved lines, or at least two lines having straight and arcuate segments. In a particular embodiment, the fluid outlets 106 can lie along two straight lines oriented parallel with respect to one another. Fluid outlets 106 disposed along the lines can be staggered with respect to one another such that an inter-spatial distance between the fluid outlets 106 is minimized. In another embodiment, the fluid outlets 106 can terminate at a same, or generally similar, location, as measured perpendicular to the lines 116.

The fluid manifold 100 further includes a volume 118 disposed between the fluid inlet 104 and the plurality of fluid outlets 106. In an embodiment, the volume 118 can define a central aperture adapted to permit fluid communication between the fluid inlet 104 and the fluid outlets 106.

FIG. 2 illustrates a cross-sectional perspective view of the fluid manifold 100 in accordance with an embodiment. In the illustrated embodiment, the volume 118 defines a triangular cross section, as viewed from a top view. In a more particular embodiment, the volume 118 can define a truncated triangle. That is, the triangular volume 118 can have one or more cutoff apexes. In the illustrated embodiment, the volume 118 defines a cutoff apex closest to the fluid inlet 104. In another embodiment, the volume 118 can define a non-triangular cross section, as viewed form the top view. The non-triangular cross section can include linear segments, arcuate segments, or combinations thereof, as viewed from the top view.

In an embodiment, the volume 118 can define a quadrilateral, or generally quadrilateral, cross section, as viewed from a side view. For instance, the volume 118 can define an upper major surface (not illustrated) and a lower major surface 120 spaced apart by the volume 118. In an embodiment, the upper and lower major surfaces can be parallel with one another. In the illustrated embodiment, the upper and lower major surfaces of the volume 118 are angularly offset from one another by at least 1°, at least 2°, at least 3°, at least 4°, at least 5°, at least 10°, or at least 20°. In another embodiment, the upper and lower major surfaces of the volume 118 can be angularly offset from one another by no greater than 85°, no greater than 70°, no greater than 55°, no greater than 40°, or no greater than 25°. Moreover, the upper and lower major surfaces of the volume 118 can be angularly offset from one another by an angle in a range between any of the values provided above, such as between 1° and 85°, between 5° and 70°, or between 10° and 20°.

In the illustrated embodiment, the volume 118 can define a tapered profile, as created by straight walls angled at a constant rate. In another embodiment, the volume 118 can taper through the use of one or more steps, or varying angled wall portions connected together.

In an embodiment, a tallest portion of the volume 118, i.e., a portion of the volume 118 with a largest thickness as measured between the major surfaces, can be near the fluid inlet 104. In another embodiment, a shortest portion of the volume 118 can be near the fluid outlets 106. In certain instances, the rate of taper can be uniform, or generally uniform, as measured laterally across the volume 118. That is, for instance, the thickness of the volume 118 can be constant as measured along a line oriented perpendicular to the central axis of the fluid inlet 104.

In an embodiment, the volume 118 can define a tapered width and a tapered thickness oriented opposite of one another. That is, as the width of the volume 118 increases, the thickness can decrease. In a particular embodiment, the thickness of the volume 118 can be constant, or generally constant, as measured along the width of the volume 118. That is, a line oriented parallel with the line 116 illustrated in FIG. 1 can define a portion of the volume 118 with a fixed thickness.

The body 102 defines an inlet sidewall thickness, as measured along a fluid inlet coupling portion 122, and a volume sidewall thickness, as measured along the volume 118, different from the inlet sidewall thickness. The volume sidewall thickness is greater than the inlet sidewall thickness. In another embodiment, the volume sidewall thickness can vary, as measured along the volume 118. For instance, the volume sidewall thickness can taper, as measured between the fluid inlet 104 and the fluid outlets 106. In a more particular embodiment, the volume sidewall thickness can taper from thickest near the fluid inlet 104 to thinner near the fluid outlets 106. In another embodiment, the taper of the volume sidewall thickness can be thickest near the fluid outlets 106.

In an embodiment, the area of the volume 118, as viewed parallel with the plane 112 (FIG. 1), can be constant along the length of the volume 118 (the length of the volume 118 is parallel with the central axis 114 of the fluid outlets 106). For instance, as the height of the volume 118 is reduced along the length, the width can increase. In another embodiment, the area of the volume 118 can taper between the fluid inlet 104 and the fluid outlets 106. For instance, the area can increase from the fluid inlet 104 to the fluid outlets 106. In another example, the area can decrease from the fluid inlet 104 to the fluid outlets 106.

In an embodiment, adjacent fluid outlets, e.g., fluid outlets 108 and 110, can be spaced apart from one another by a wall 124. In a particular embodiment, the wall 124 can be part of the body 102 of the fluid manifold 100. For example, the wall 124 can be integral with the body 102. In an embodiment, all of the fluid outlets 106 can be separated by a wall 124. In a more particular embodiment, the walls 124 between adjacent fluid outlets 106 can have the same shape or size. In another embodiment, the walls 124 can be different from one another in shape, size, or another attribute.

In an embodiment, the fluid inlet 104 can define a diameter greater than the diameters of at least one of the plurality of fluid outlets 106. In a more particular embodiment, the fluid inlet 104 can define a diameter greater than the diameter of all of the plurality of fluid outlets 106. In certain instances, the plurality of fluid outlets 106 can share a same diameter as compared to one another.

In use, the fluid outlets 106 can selectively receive hoses for transport of fluid from the fluid manifold 100 to one or more areas, such as one or more pharmaceutical containers or processing areas. In a particular embodiment, the fluid outlets 106 can define openings 126 adapted to receive ends of hoses (not illustrated). The openings 126 can define diameters greater than the diameter of the corresponding fluid outlet 106. The opening 126 can define a diameter approximately equal to an outer diameter of the hose. The fluid outlet 106 can define a diameter approximately equal to an inner diameter of the hose. Thus, the difference between the opening 126 and fluid outlet 106 can define a sidewall thickness of the hose to be received in the fluid outlet 106.

In certain instances, the volume 118 can define a storage area for fluid not yet passed from the plurality of fluid outlets 106. That is, after fluid transport through the fluid manifold 100 is completed, a certain volume of fluid can be retained within the volume 118. Such fluid retention can be undesirable as the fluids being retained within the volume 118 can be expensive, and the loss thereof can be financially costly. In accordance with embodiments described herein, the fluid manifold 100 can be adapted to prevent fluid retention within the volume 118 after use. In a particular embodiment, the storage area, i.e., the volume 118, can be less than 250 cc, less than 100 cc, less than 50 cc, less than 25 cc, less than 10 cc, or less than 5 cc. In a more particular embodiment, the storage area can be less than 4 cc, less than 3 cc, or less than 2 cc.

In an embodiment, the body 102 of the fluid manifold 100 can be monolithic. For instance, the body 102 can be formed from a single piece by molding, such as injection molding, pressing, stamping, or another similar forming operation. In other embodiments, the body 102 can include a multi-piece construction. For example, the body 102 can include two halves joined together at a seam. Alternatively, the body 102 can include multiple portions coupled together, such as an inlet portion, an outlet portion, and a volume portion disposed between the inlet and outlet portions.

Exemplary materials for the body 102 can include polymers, metals, alloys, organic compounds, and combinations thereof. By way of non-limiting example, the body 102 can include, for instance, nylon, polyether ether ketone (PEEK), polyether sulfone (PES), polytetrafluoroethylene (PTFE), polyimide, or an organic or inorganic composite. Further exemplary polymers include fluorinated ethylene-propylene (FEP), polyvinylidenfluoride (PVDF), polychlorotrifluoroethylene (PCTFE), ethylene chlorotrifluoroethylene *(ECTFE),* perfluoroalkoxy alkane (PFA), polyacetal, polybutylene terephthalate (PBT), polyethylene terephthalate (PET), polyimide (PI), polyetherimide, polyethylene (PE), polysulfone, polyamide (PA), polyphenylene oxide, polyphenylene sulfide (PPS), polyurethane, polyester, liquid crystal polymers (LCP), or any combination thereof. In particular embodiments, the body 102 can further include a filler. Exemplary fillers include glass fibers, carbon fibers, silicon, PEEK, aromatic polyester, carbon particles, bronze, fluoropolymers, thermoplastic fillers, aluminum oxide, polyamidimide (PAI), PPS, polyphenylene sulfone (PPSO2), LCP, aromatic polyesters, molybdenum disulfide, tungsten disulfide, graphite, grapheme, expanded graphite, boron nitrade, talc, calcium fluoride, or any combination thereof. Additionally, the filler can include alumina, silica, titanium dioxide, calcium fluoride, boron nitride, mica, Wollastonite, silicon carbide, silicon nitride, zirconia, carbon black, pigments, or any combination thereof.

In certain instances, the fluid manifold 100 can include integral hoses coupled with the fluid manifold 100. In a particular embodiment, the integral hoses, or portions thereof, can be monolithic with the body 102.

## Claims

1. A fluid manifold (100) comprising:
a body (102) defining:
a fluid inlet (104);
a plurality of fluid outlets (106); and
a volume (118) disposed between and in fluid communication with the fluid inlet and the plurality of fluid outlets, wherein the volume defines:
a first width, W_{I}, as measured at a first location near the fluid inlet,
a second width, Wo, as measured at a second location near the plurality of fluid outlets,
a first thickness, T_{I}, as measured at the first location perpendicular to W_{I}, and
a second thickness, To, as measured at the second location perpendicular to Wo,
and wherein Wo > W_{I} ≥ T_{I} ≥ T_{O},
**characterized in that** the body defines an inlet sidewall thickness as measured along a fluid inlet coupling portion (122), and a volume sidewall thickness as measured along the volume, and wherein the volume sidewall thickness is greater than the inlet sidewall thickness.

2. A fluid manifold comprising:
a body (102) defining:
a fluid inlet (104);
a plurality of fluid outlets (106); and
a volume (118) disposed between and in fluid communication with the fluid inlet and the plurality of fluid outlets, wherein the volume has a tapered width and a tapered thickness, and wherein the tapered width tapers in a direction opposite of the tapered thickness,
**characterized in that** the body defines an inlet sidewall thickness as measured along a fluid inlet coupling portion (122), and a volume sidewall thickness as measured along the volume, and wherein the volume sidewall thickness is greater than the inlet sidewall thickness.

3. The fluid manifold of any one of claims 1 and 2, wherein the plurality of fluid outlets are disposed along a same plane (112).

4. The fluid manifold of any one of claims 1 and 2, wherein the plurality of fluid outlets are disposed along at least two planes, and wherein the at least two planes are parallel with respect to one another.

5. The fluid manifold of any one of claims 1 and 2, wherein internal ends of the plurality of fluid outlets are disposed along a line (116) extending perpendicular to a central axis of the fluid inlet.

6. The fluid manifold of any one of claims 1 and 2, wherein at least one of the plurality of fluid outlets has a central axis (114) parallel with a central axis of the fluid inlet.

7. The fluid manifold of any one of claims 1 and 2, wherein the volume defines a triangular cross section, as viewed from a top view.

8. The fluid manifold of any one of claims 1 and 2, wherein the volume defines a quadrilateral cross section, as viewed from a side view.

9. The fluid manifold of any one of claims 1 and 2, wherein the inlet has a diameter greater than any of the plurality of outlets.

10. The fluid manifold of any one of claims 1 and 2, wherein each of the plurality of fluid outlets defines an opening adapted to receive an end of a hose.

11. The fluid manifold of claim 10, wherein the opening has a diameter greater than a diameter of the fluid outlet.

12. The fluid manifold of any one of claims 1 and 2 , wherein the volume sidewall thickness tapers, as measured between the fluid inlet and the plurality of fluid outlets.

13. The fluid manifold of any one of claims 1 and 2, wherein adjacent fluid outlets are spaced apart from one another by a wall of the body, and wherein an upstream side of the wall defines a curved profile.

14. A fluid system comprising:
a fluid inlet hose;
a plurality of fluid outlet hoses; and
a fluid manifold (100) according to claim 2 coupled between the fluid inlet hose and the plurality of fluid outlet hoses.

## Patentansprüche

1. Fluidverteiler (100), umfassend:
einen Körper (102), definierend:
einen Fluideinlass (104);
eine Vielzahl von Fluidauslässen (106); und
ein Volumen (118), das zwischen und in Fluidverbindung mit dem Fluideinlass und der Vielzahl von Fluidauslässen angeordnet ist, wobei das Volumen Folgendes definiert: eine erste Breite, W_{I}, die an einer ersten Stelle nahe dem Fluideinlass gemessen wird, eine zweite Breite, W_{O}, die an einer zweiten Stelle nahe der Vielzahl von Fluidauslässen gemessen wird,
eine erste Dicke, T_{I}, die an der ersten Stelle senkrecht zu W_{I} gemessen wird, und
eine zweite Dicke T_{O}, die an der zweiten Stelle senkrecht zu W_{O} gemessen wird,
und wobei W_{O} > W_{I} ≥ T_{I} > T_{O},
**dadurch gekennzeichnet, dass**
der Körper eine Einlassseitenwanddicke, gemessen entlang eines Fluideinlasskopplungsabschnitts (122), und eine Volumenseitenwanddicke, gemessen entlang des Volumens, definiert, und wobei die Volumenseitenwanddicke größer ist als die Einlassseitenwanddicke.

2. Fluidverteiler, umfassend:
einen Körper (102), definierend:
einen Fluideinlass (104);
eine Vielzahl von Fluidauslässen (106); und
ein Volumen (118), das zwischen und in Fluidverbindung mit dem Fluideinlass und der Vielzahl von Fluidauslässen angeordnet ist, wobei das Volumen eine verjüngte Breite und eine verjüngte Dicke aufweist und wobei sich die verjüngte Breite in einer Richtung entgegengesetzt zu der verjüngten Dicke verjüngt,
**dadurch gekennzeichnet, dass**
der Körper eine Einlassseitenwanddicke, gemessen entlang eines Fluideinlasskopplungsabschnitts (122), und eine Volumenseitenwanddicke, gemessen entlang des Volumens, definiert, und wobei die Volumenseitenwanddicke größer ist als die Einlassseitenwanddicke.

3. Fluidverteiler nach einem der Ansprüche 1 und 2, wobei die Vielzahl von Fluidauslässen entlang einer gleichen Ebene (112) angeordnet ist.

4. Fluidverteiler nach einem der Ansprüche 1 und 2, wobei die Vielzahl der Fluidauslässen entlang mindestens zweier Ebenen angeordnet sind, und wobei die mindestens zwei Ebenen parallel zueinander sind.

5. Fluidverteiler nach einem der Ansprüche 1 und 2, wobei die inneren Enden der Vielzahl von Fluidauslässen entlang einer Linie (116) angeordnet sind, die sich senkrecht zu einer Mittelachse des Fluideinlasses erstreckt.

6. Fluidverteiler nach einem der Ansprüche 1 und 2, wobei mindestens einer der Vielzahl von Fluidauslässen eine Mittelachse (114) aufweist, die parallel zu einer Mittelachse des Fluideinlasses verläuft.

7. Fluidverteiler nach einem der Ansprüche 1 und 2, wobei das Volumen in einer Draufsicht einen dreieckigen Querschnitt definiert.

8. Fluidverteiler nach einem der Ansprüche 1 und 2, wobei das Volumen in einer Seitenansicht einen viereckigen Querschnitt aufweist.

9. Fluidverteiler nach einem der Ansprüche 1 und 2, wobei der Einlass einen größeren Durchmesser als ein beliebiger der Vielzahl von Auslässen hat.

10. Fluidverteiler nach einem der Ansprüche 1 und 2, wobei jeder der Vielzahl von Fluidauslässen eine Öffnung definiert, die zur Aufnahme eines Schlauchendes geeignet ist.

11. Fluidverteiler nach Anspruch 10, wobei die Öffnung einen Durchmesser aufweist, der größer als der Durchmesser des Fluidauslasses ist.

12. Fluidverteiler nach einem der Ansprüche 1 und 2, wobei sich die Volumenseitenwanddicke, gemessen zwischen dem Fluideinlass und der Vielzahl von Fluidauslässen, verjüngt.

13. Fluidverteiler nach einem der Ansprüche 1 und 2, wobei benachbarte Fluidauslässe durch eine Wand des Körpers voneinander getrennt sind und wobei eine stromaufwärtige Seite der Wand ein gekrümmtes Profil definiert.

14. Fluidsystem, umfassend:
einen Fluideinlassschlauch;
eine Vielzahl von Fluidauslassschläuchen; und
einen Fluidverteiler (100) nach Anspruch 2, der zwischen dem Fluideinlassschlauch und der Vielzahl von Fluidauslassschläuchen angeschlossen ist.

## Revendications

1. Collecteur de fluide (100) comprenant :
un corps (102) définissant :
une entrée de fluide (104) ;
une pluralité de sorties de fluide (106) ; et
un volume (118) disposé entre et en communication fluidique avec l'entrée de fluide et la pluralité de sorties de fluide, dans lequel le volume définit :
une première largeur, W_{I}, telle que mesurée au niveau d'un premier emplacement près de l'entrée de fluide, une seconde largeur, W_{O}, telle que mesurée au niveau d'un second emplacement près de la pluralité de sorties de fluide,
une première épaisseur, T_{I}, telle que mesurée au niveau du premier emplacement perpendiculairement à W_{I}, et
une seconde épaisseur, T_{O}, telle que mesurée au niveau du second emplacement perpendiculairement à W_{O},
et dans lequel W_{O} > W_{I} ≥ T_{I} > T_{O},
**caractérisé en ce que**
le corps définit une épaisseur de paroi latérale d'entrée telle que mesurée le long d'une partie de raccordement d'entrée de fluide (122), et une épaisseur de paroi latérale de volume telle que mesurée le long du volume, et dans lequel l'épaisseur de paroi latérale de volume est supérieure à l'épaisseur de paroi latérale d'entrée.

2. Collecteur de fluide comprenant :
un corps (102) définissant :
une entrée de fluide (104) ;
une pluralité de sorties de fluide (106) ; et
un volume (118) disposé entre et en communication fluidique avec l'entrée de fluide et la pluralité de sorties de fluide, dans lequel le volume a une largeur amincie et une épaisseur amincie, et dans lequel la largeur amincie s'amincit dans une direction opposée à l'épaisseur amincie,
**caractérisé en ce que**
le corps définit une épaisseur de paroi latérale d'entrée telle que mesurée le long d'une partie de raccordement d'entrée de fluide (122), et une épaisseur de paroi latérale de volume telle que mesurée le long du volume, et dans lequel l'épaisseur de paroi latérale de volume est supérieure à l'épaisseur de paroi latérale d'entrée.

3. Collecteur de fluide selon l'une quelconque des revendications 1 et 2, dans lequel la pluralité de sorties de fluide sont disposées le long d'un même plan (112).

4. Collecteur de fluide selon l'une quelconque des revendications 1 et 2, dans lequel la pluralité de sorties de fluide sont disposées le long d'au moins deux plans, et dans lequel les au moins deux plans sont parallèles l'un par rapport à l'autre.

5. Collecteur de fluide selon l'une quelconque des revendications 1 et 2, dans lequel des extrémités internes de la pluralité de sorties de fluide sont disposées le long d'une ligne (116) s'étendant perpendiculairement à un axe central de l'entrée de fluide.

6. Collecteur de fluide selon l'une quelconque des revendications 1 et 2, dans lequel au moins l'une de la pluralité de sorties de fluide a un axe central (114) parallèle à un axe central de l'entrée de fluide.

7. Collecteur de fluide selon l'une quelconque des revendications 1 et 2, dans lequel le volume définit une section transversale triangulaire, comme observé depuis une vue de dessus.

8. Collecteur de fluide selon l'une quelconque des revendications 1 et 2, dans lequel le volume définit une section transversale quadrilatérale, comme observé depuis une vue latérale.

9. Collecteur de fluide selon l'une quelconque des revendications 1 et 2, dans lequel l'entrée a un diamètre supérieur à toute sortie de la pluralité de sorties.

10. Collecteur de fluide selon l'une quelconque des revendications 1 et 2, dans lequel chacune de la pluralité de sorties de fluide définit une ouverture adaptée pour recevoir une extrémité d'un tuyau.

11. Collecteur de fluide selon la revendication 10, dans lequel l'ouverture a un diamètre supérieur à un diamètre de la sortie de fluide.

12. Collecteur de fluide selon l'une quelconque des revendications 1 et 2, dans lequel l'épaisseur de paroi latérale de volume s'amincit, telle que mesurée entre l'entrée de fluide et la pluralité de sorties de fluide.

13. Collecteur de fluide selon l'une quelconque des revendications 1 et 2, dans lequel des sorties de fluide adjacentes sont espacées les unes des autres par une paroi du corps, et dans lequel un côté amont de la paroi définit un profil incurvé.

14. Système de fluide comprenant :
un tuyau d'entrée de fluide ;
une pluralité de tuyaux de sortie de fluide ; et
un collecteur de fluide (100) selon la revendication 2 raccordé entre le tuyau d'entrée de fluide et la pluralité de tuyaux de sortie de fluide.
